# FASCICULE DE BREVET EUROPEEN

(11) **EP 3 898 522 B1**
(45) Date de publication et mention de la délivrance du brevet: **04.01.2023**
(21) Numéro de dépôt: 19842781.7
(22) Date de dépôt: 18.12.2019
(51) Int. Cl.: C01G 49/00

(54) **MATÉRIAU ACTIF D'ÉLECTRODE NÉGATIVE À BASE D'HYDROXYSULFURE DE FER ET DE LITHIUM**
NEGATIVELEKTRODEN-AKTIVMATERIAL AUF DER BASIS VON EISEN UND LITHIUMHYDROXYSULFID
NEGATIVE ELECTRODE ACTIVE MATERIAL BASED ON IRON AND LITHIUM HYDROXYSULFIDE

(30) Priorité: 18.12.2018 FR 1873243
(43) Date de publication de la demande: 27.10.2021
(73) Titulaire: Renault s.a.s, 92100 Boulogne Billancourt (FR); CENTRE NATIONAL DE LA RECHERCHE SCIENTIFIQUE (CNRS), 75016 Paris (FR); Ecole Nationale Superieure de Chimie Paris, 75231 Paris Cedex 05 (FR)
(72) Inventeur: BARBOUX, Philippe, 94240 L'HAY LES ROSES (FR); CHAKIR, Mohamed, 91180 SAINT-GERMAIN LES ARPAJON (FR); GIAUME, Domitille, 75013 PARIS (FR); MIR, Caroline, 75018 PANTIN (FR)
(74) Mandataire: Casalonga
(86) Numéro de dépôt international: PCT/EP2019/085857
(87) Numéro de publication internationale: WO 2020/127427

(56) Documents cités:
- JP-A- 2014 017 157
- ANJI REDDY M ET AL: "Monoclinic iron hydroxy sulphate: A new route to electrode materials", ELECTROCHEMISTRY COMMUNICATIONS, ELSEVIER, AMSTERDAM, NL, vol. 11, no. 9, 1 septembre 2009 (2009-09-01), pages 1807-1810, XP026716407, ISSN: 1388-2481, DOI: 10.1016/J.ELECOM.2009.07.024 [extrait le 2009-07-21]
- ASWIN K. MANOHAR ET AL: "The Role of Sulfide Additives in Achieving Long Cycle Life Rechargeable Iron Electrodes in Alkaline Batteries", JOURNAL OF THE ELECTROCHEMICAL SOCIETY, vol. 162, no. 9, 1 janvier 2015 (2015-01-01), pages A1864-A1872, XP055630572, ISSN: 0013-4651, DOI: 10.1149/2.0741509jes

## Description

L'invention concerne le domaine général des batteries rechargeables lithium-ion (Li-ion). L'invention concerne plus précisément les matériaux actifs d'électrode négative pour batteries Li-ion, et les électrodes négatives les comprenant. L'invention concerne également un procédé de fabrication du matériau actif d'électrode.

De manière classique, les batteries Li-ion comprennent une ou plusieurs électrodes positives, une ou plusieurs électrodes négatives, un électrolyte et un séparateur.

Les batteries Li-ion sont de plus en plus utilisées comme source d'énergie autonome, en particulier dans les applications liées à la mobilité électrique. Cette tendance s'explique notamment par des densités d'énergie massique et volumique nettement supérieures à celles des accumulateurs classiques nickel cadmium (Ni-Cd) et nickel-hydrure métallique (Ni-MH), une absence d'effet mémoire, une auto-décharge faible par rapport à d'autres accumulateurs et également par une baisse des coûts au kilowatt-heure liée à cette technologie.

Les batteries Li-ion comprennent des matériaux actifs d'électrode permettant l'insertion et la désinsertion des ions lithium lors des processus de charge et de décharge. Ces insertions et désinsertions doivent être réversibles pour que l'accumulateur puisse stocker de l'énergie sur plusieurs cycles.

Une bonne mobilité de l'ion lithium dans la structure ainsi qu'une bonne conductivité électrique du matériau d'électrode sont des propriétés essentielles permettant d'utiliser ces batteries à des vitesses de charge et décharge élevées, autorisant une puissance électrique importante. La puissance spécifique d'une batterie est un enjeu important pour l'application automobile car elle permet d'utiliser des batteries plus légères pour un même effort ou elle permet d'utiliser des batteries dans des conditions plus sécurisées.

Les matériaux d'électrodes à base de sulfure ont été développés à la fin des années 1970. On supposait que la forte covalence des sulfures leur assurait une bonne mobilité de l'ion lithium, et une bonne mobilité électronique assurant ainsi une bonne conductivité électrique. Beaucoup de sulfures de métaux de transition (MoS₂, TiS₂) possèdent des structures lamellaires en feuillets entre lesquels le lithium peut diffuser rapidement en quantité importante, conférant au composé une bonne capacité (nombre d'ions lithium ou de charges pouvant être insérés par masse d'électrode exprimés en mAh).

Néanmoins, un défaut des sulfures est lié à la masse du soufre. Par ailleurs, le caractère mou (au sens mécanique) de ces composés qui se déforment fortement au cours de l'insertion-désinsertion du lithium, provoque souvent un vieillissement mécanique et un gonflement des batteries. D'autre part, ces composés sont exempts de lithium et la batterie doit être fabriquée en vis-à-vis de lithium métallique ou d'un composé lithié à bas potentiel, souvent très instable à l'air (ex LiC₆).

Au début des années 1980, des oxydes contenant déjà du lithium ont donc été proposés en remplacement des sulfures. Ces composés sont maintenant couramment employés dans les batteries actuelles. Les principaux composés sont les oxydes lamellaires, par exemple LiCoO₂, LCO, les oxydes tridimensionnels dérivés des structure spinelles (par exemple LiM₂O₄, LMO) et les structures de type olivine (LiFePO₄, LFP).

Face à ces oxydes préalablement lithiés, les matériaux actifs d'électrode négative doivent avoir un potentiel d'insertion bas par rapport au lithium et être capables d'insérer du lithium. Le plus connu est le graphite mais parmi les autres matériaux couramment employés, on peut citer l'oxyde Li₄Ti₅O₁₂ (LTO) qui présente une capacité théorique de 175 mAh/g et un potentiel d'oxydo-réduction de 1,5V, comme cela est mentionné dans « Ti-based compounds as anode materials for Li-ion batteries », Zhu, G.N., Wang, Y.G., Xia, Y.Y., Energy & Environmental Science, 5(5), 6652-6667, 2012. Ce matériau actif présente une grande stabilité au cours du cyclage, ce qui fait son intérêt malgré sa capacité massique limitée par rapport au graphite.

Par ailleurs, il présente initialement un caractère isolant, rendant indispensable l'ajout de composé conducteur au sein de l'électrode négative. ANJI REDDY ET AL, ELECTROCHEMISTRY COMMUNICATIONS, vol. 11, no. 9, 1 septembre 2009, pages 1807-1810, divulgue FeOHSO₄ comme matériau actif pour batterie lithium-ion.

Ainsi, il existe un besoin de développer de nouveaux matériaux actifs d'électrodes négatives permettant de surmonter les inconvénients mentionnés ci-dessus liés à l'utilisation de l'oxyde LTO.

Il a été découvert qu'un matériau actif d'électrode négative particulier à base d'hydroxysulfure de lithium et de fer permettait d'obtenir une capacité améliorée et une conductivité améliorée.

L'invention a donc pour objet un matériau actif d'électrode négative pour batterie lithium-ion de formule (I) suivante :

Li₁₋ₓOHFe₁₊ₓS (I),

dans laquelle x varie de 0,00 à 0,25, de préférence de 0,05 à 0,20.

Un autre objet de l'invention est un procédé de préparation du matériau actif selon l'invention. L'invention a également pour objet une électrode négative comprenant le matériau actif selon l'invention. L'invention concerne également une batterie Li-ion comprenant au moins une électrode négative selon l'invention.

D'autres avantages et caractéristiques de l'invention apparaitront plus clairement à l'examen de la description détaillée et des dessins annexés sur lesquels :
[Fig 1] est un graphe représentant le potentiel d'une demi-cellule de batterie Li-ion, en fonction de la quantité de lithium inséré électrochimiquement, exprimée en capacité.
[Fig 2] est un graphe représentant la capacité d'une demi-cellule de batterie Li-ion, en fonction du nombre de cycles.
[Fig 3] est un graphe représentant le potentiel d'une demi-cellule de batterie Li-ion, en fonction de la quantité de lithium inséré électrochimiquement, exprimée en capacité.

Il est précisé que l'expression « de... à... » utilisée dans la présente description de l'invention doit s'entendre comme incluant chacune des bornes mentionnées.

La composition initiale (après synthèse) du matériau actif d'électrode négative pour batterie lithium-ion selon l'invention répond à la formule (I) telle que mentionnée ci-dessus.

De manière préférée, x est égal à 0,05. Ainsi, le matériau actif d'électrode répond à la formule Li_{0,95}OHFe_{1,05}S.

Avantageusement, le matériau actif selon l'invention se présente sous la forme de plaquettes présentant des dimensions latérales allant de 0,5 à 3 µm, et une épaisseur allant de 90 à 110 nm.

L'invention a également pour objet un procédé de préparation du matériau actif selon l'invention comprenant les étapes suivantes :
(a) ajouter du fer et du soufre dans une solution aqueuse de LiOH selon une concentration allant de 2 à 6 mol/L, de préférence de 4 à 6 mol/L ;
(b) chauffer le mélange obtenu à l'issue de l'étape (a) jusqu'à une température allant de 130 à 190°C ;
(c) récupérer ledit matériau actif.

Avantageusement, le fer se présente sous la forme d'une poudre de fer.

Lorsque la quantité de lithium dépasse la concentration à saturation (environ 5 mol/L à 20°C), une partie de l'hydroxyde est solide.

Selon un mode de réalisation préféré, l'étape (b) est suivie d'une étape de refroidissement, de filtration et de séchage. Puis, après ce séchage, le produit obtenu peut être broyé.

Un autre objet de l'invention est une électrode négative comprenant le matériau actif selon l'invention.

De manière préférée, l'électrode négative selon l'invention comprend en outre au moins un composé conducteur. Ainsi, dans ce mode de réalisation, l'électrode selon l'invention peut comprendre le matériau actif selon l'invention et au moins un composé conducteur.

Selon un mode de réalisation particulier, le composé conducteur est choisi parmi les particules métalliques, le carbone, et leurs mélanges, de préférence le carbone.

Le carbone peut se présenter sous la forme de graphite, de noir de carbone, de fibres de carbone, de nanofils de carbone, de nanotubes de carbone, de nanosphères de carbone, de préférence de noir de carbone.

En particulier, l'électrode négative selon l'invention comprend avantageusement le noir de carbone SuperC65^{®} commercialisé par Timcal.

De manière préférée, la teneur en matériau actif selon l'invention varie de 50 à 97% en poids, de préférence de 70 à 97% en poids, plus préférentiellement de 80 à 97% en poids par rapport au poids total de l'électrode négative.

Avantageusement, la teneur en composé conducteur varie de 3 à 30% en poids, de préférence de 3 à 20% en poids, par rapport au poids total de l'électrode négative.

Selon un mode de réalisation particulièrement préféré, la teneur en matériau actif varie de 70 à 97% en poids, et la teneur en composé conducteur varie de 3 à 30% en poids, par rapport au poids total de l'électrode négative.

La présente invention peut concerner également une cellule de batterie Li-ion comprenant une électrode négative comprenant le matériau actif selon l'invention, une électrode positive, un séparateur et un électrolyte.

De préférence, la cellule de batterie comprend un séparateur localisé entre les électrodes et jouant le rôle d'isolant électrique. Plusieurs matériaux peuvent être utilisés comme séparateurs. Les séparateurs sont généralement composés de polymères poreux, de préférence de polyéthylène et/ou de polypropylène. Ils peuvent également être en microfibres de verre.

Avantageusement, le séparateur utilisé est un séparateur en microfibres de verre CAT No. 1823-070^{®} commercialisé par Whatman.

Préférentiellement, ledit électrolyte est liquide.

Cet électrolyte peut comprendre un ou plusieurs sels de lithium et un ou plusieurs solvants.

Le ou les sels de lithium comprennent généralement des anions inertes. Des sels de lithium appropriés peuvent être choisis parmi le bis[(trifluorométhyl)sulfonyl]imide de lithium (LiN(CF₃SO₂)₂), le trifluorométhane sulfonate de lithium (LiCF₃SO₃), le bis(oxalato)borate de lithium (LiBOB), le difluoro(oxolato) borate de lithium (LiDFOB), le bis(perfluoroéthylsulfonyl)imide de lithium (LiN(CF₃CF₂SO₂)₂), LiClO₄, LiAsF₆, LiPF₆, LiBF₄, Lil, LiCH₃SO₃, LiB(C₂O₄)₂, LiN(R_{F}SO₂)₂, LiC(R_{F}SO₂)₃, R_{F} étant un groupement choisi parmi un atome de fluor et un groupement perfluoroalkyle comportant de un à huit atomes de carbone.

Le ou les sels de lithium sont, de préférence, dissous dans un ou plusieurs solvants choisis parmi les solvants polaires aprotiques, par exemple, le carbonate d'éthylène (noté « EC »), le carbonate de propylène, le carbonate de diméthyle, le carbonate de diéthyle (noté « DEC »), le carbonate de méthyle et d'éthyle, le 1,3-dioxolane et le diméthoxyéthane, ainsi que tous les mélanges de tous ces différents solvants.

Avantageusement, l'électrolyte comprend un mélange équivolumique de carbonate d'éthylène et de carbonate de diéthyle avec le sel de lithium LiPF₆ à 1M.

La présente invention a également pour objet une batterie Li-ion comprenant au moins une électrode négative selon l'invention.

La présente invention porte également sur l'utilisation d'un matériau de formule (I) suivante :

Li₁₋ₓOHFe₁₊ₓS (I),

dans laquelle x varie de 0,00 à 0,25, de préférence de 0,05 à 0,20, en tant que matériau actif d'électrode négative pour batterie lithium-ion.

De manière particulièrement préférée, x est égal à 0,05.

La présente invention est illustrée de manière non-limitative par les exemples suivants.

### EXEMPLES

### I. Préparation des demi-cellules électrochimiques

### 1. Synthèse des matériaux actifs

### Synthèse du matériau actif Li_{0,95}OHFe_{1,05}S

1,117 g de poudre de fer et 0,64 g de soufre sont ajoutés dans 30 ml d'une solution LiOH (équivalent en concentration de 6 mol/L). L'ensemble est placé dans un autoclave de 40 mL et est chauffé sans agitation à 160°C pendant 14h dans une enceinte fermée et résistant à la pression. Après refroidissement, un précipité noir est observé, filtré et séché pendant 4h à 90°C sous atmosphère d'azote sec. Après ce séchage, le produit est broyé permettant l'obtention d'une poudre fine (le rendement est d'environ 80% en poids).

### 2. Préparation des électrodes de matériau actif (électrodes négative)

A partir de matériau, deux électrodes de matériau actif ont été préparées, respectivement nommées EN-A et EN-B.

### 2.1 Préparation de l'électrode EN-A

L'électrode de matériau actif est fabriquée en mélangeant 80% en poids de matériau actif de formule Li_{0,95}OHFe_{1,05}S et 20% en poids de noir de carbone SuperC65^{®}, le mélange étant ensuite broyé à la main dans un mortier en agate.

### 2.2 Préparation de l'électrode EN-B

L'électrode négative est constituée par le matériau actif de formule Li_{0,95}OHFe_{1,05}S, seul.

### 3. Assemblage des demi-cellules électrochimiques

Deux demi-cellules électrochimiques ont ensuite été préparées comprenant respectivement les électrodes négatives EN-A et EN-B.

Les demi-cellules sont nommées respectivement DC-A et DC-B.

L'assemblage des demi-cellules électrochimiques est réalisé en boîte à gants à l'aide d'un dispositif constitué d'un raccord Swagelok^{®} de 12 mm de diamètre. Chacune des demi-cellules comprend un séparateur, une électrode positive et un électrolyte.

### 3.1 Assemblage de la demi-cellule DC-A

### Electrode du matériau actif

Une masse de 25 mg de l'électrode EN-A, sous la forme d'une poudre, est ensuite étalée sur un piston en acier inoxydable placé dans la demi-cellule électrochimique DC-A.

### Séparateur

Deux couches de séparateur en microfibres de verre CAT No. 1823-070^{®} sont utilisées afin d'éviter tout court-circuit entre l'électrode positive et l'électrode négative durant les cycles de charge et de décharge. Ces séparateurs sont découpés selon un diamètre de 12 mm et une épaisseur de 1 mm et sont déposés sur la poudre constituant l'électrode négative.

### Contre électrode en lithium

Des pastilles de 12 mm de diamètre sont découpées dans une feuille de lithium métal. La pastille obtenue est alors collée par pression sur un collecteur de courant en acier inoxydable. Ce collecteur est ensuite déposé sur la membrane séparatrice dans la cellule.

### Electrolyte

L'électrolyte utilisé comprend une solution commerciale composée de LiPF₆ dissous à la concentration de 1 mol/L dans un mélange équivolumique de carbonate d'éthylène et de carbonate de diéthyle. Un second piston est enfoncé dans la cellule pour assurer l'étanchéité et permettre un contact électrique avec l'électrode du matériau actif.

### 3.2 Assemblage de la demi-cellule DC-B

### Electrode du matériau actif

Une masse de 25 mg de l'électrode EN-B, sous la forme d'une poudre, est ensuite étalée sur un piston en acier inoxydable placé dans la demi-cellule électrochimique DC-B.

Le séparateur, la contre électrode en lithium et l'électrolyte sont identiques à ceux utilisés dans la demi-cellule DC-A.

### II. Tests électrochimiques

### 1. Demi-cellule DC-A

Un cyclage galvanostatique est réalisé à l'aide d'un cycleur BioLogic à un régime de cyclage de C/10, C correspondant au courant permettant d'insérer en une heure un lithium par fer dans le matériau.

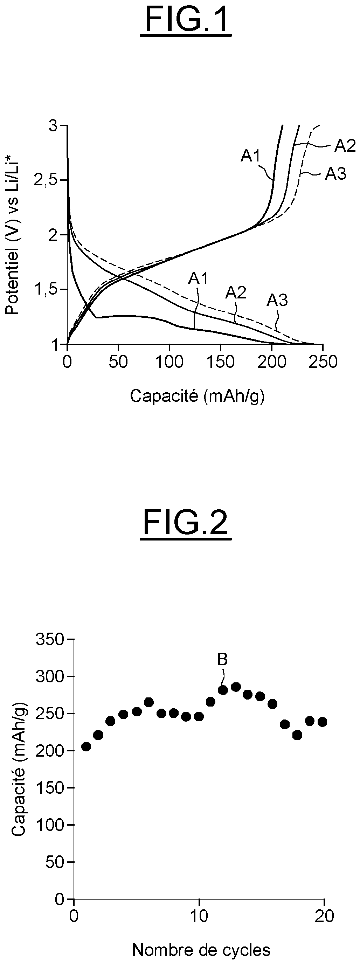

Les bornes de tension ont été définies de 3,0 à 1,0 V par rapport à l'électrode de référence Li/Li⁺. Trois cycles de charge et de décharge ont été effectués, comme le montre la figure 1. En effet, la figure 1 est un graphe représentant le potentiel de la demi-cellule A, en fonction de la quantité de lithium inséré exprimée en capacité par rapport à la masse de matériau actif composant l'électrode (mAh/g).

Sur cette figure 1, la courbe A1 correspond au premier cycle de charge et de décharge. La courbe A2 correspond au deuxième cycle de charge et de décharge. La courbe A3 correspond au troisième cycle de charge et de décharge.

Ainsi, il est constaté que la première décharge permet d'atteindre une capacité irréversible de 200 mAh/g, tandis que les cycles suivants mènent à une capacité réversible de 240 mAh/g.

Par ailleurs, la capacité de la demi-cellule A selon l'invention en fonction du nombre de cycles a également été évaluée, comme le montre la courbe B sur la figure 2.

Après 20 cycles de charge et de décharge, la capacité est d'environ 250 mAh/g.

Ainsi, la capacité de la demi-cellule A selon l'invention est bien supérieure à celle d'une demi-cellule présentant une électrode négative comprenant l'oxyde LTO. En effet, l'oxyde LTO présente une capacité théorique de 175 mAh/g.

En outre, la demi-cellule A présente une bonne tenue de cyclage.

Le potentiel moyen déterminé comme le potentiel à la moitié de la capacité est de 1,7V vs Li/Li⁺ et est très proche du potentiel de l'oxyde LTO.

Ainsi, le matériau actif selon l'invention permet d'obtenir une capacité améliorée.

### 2. Demi-cellule DC-B

Un cyclage galvanostatique est réalisé à l'aide d'un cycleur BioLogic à un régime de cyclage de C/10, C correspondant au courant permettant d'insérer en une heure un lithium par fer dans le matériau.

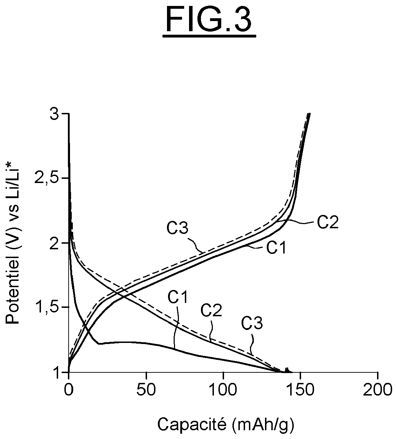

Les bornes de tension ont été définies de 3,0 à 1,0 V par rapport à l'électrode de référence Li/Li⁺. Trois cycles de charge et de décharge ont été effectués, comme le montre la figure 3. En effet, la figure 3 est un graphe représentant le potentiel de la demi-cellule B, en fonction de la capacité.

Sur cette figure 3, la courbe C1 correspond au premier cycle de charge et de décharge. La courbe C2 correspond au deuxième cycle de charge et de décharge. La courbe C3 correspond au troisième cycle de charge et de décharge.

Ainsi, il est constaté que la capacité est de 140 mAh/g, après trois cycles.

Ainsi, la capacité de la demi-cellule B selon l'invention reste élevée. En effet, malgré l'absence de composé conducteur, la perte en capacité n'est que d'environ 45% par rapport à celle de la demi-cellule A. Ainsi, le matériau actif selon l'invention est un matériau conducteur. En d'autres termes, la conductivité est améliorée grâce au matériau actif selon l'invention.

## Revendications

1. Matériau actif d'électrode négative pour batterie lithium-ion de formule (I) suivante :
Li₁₋ₓOHFe₁₊ₓS (I),
dans laquelle x varie de 0,00 à 0,25, de préférence de 0,05 à 0,20.

2. Matériau actif selon la revendication 1, **caractérisé en ce que** x est égal à 0,05.

3. Procédé de fabrication du matériau actif tel que défini à la revendication 1 ou 2 comprenant les étapes suivantes :
(a) Ajouter du fer et du soufre dans une solution aqueuse de LiOH selon une concentration allant de 2 à 6 mol/L, de préférence de 4 à 6 mol/L ;
(b) Chauffer le mélange obtenu à l'issue de l'étape (a) jusqu'à une température allant de 130 à 190°C ;
(c) Récupérer ledit matériau actif.

4. Electrode négative comprenant au moins un matériau actif tel que défini à la revendication 1 ou 2.

5. Electrode négative selon la revendication 4, **caractérisée en ce qu'**elle comprend en outre au moins un composé conducteur.

6. Electrode négative selon la revendication 5, **caractérisée en ce que** le composé conducteur est choisi parmi les particules métalliques, le carbone, et leurs mélanges, de préférence le carbone.

7. Electrode négative selon la revendication 6, **caractérisée en ce que** le carbone se présente sous la forme de graphite, de noir de carbone, de fibres de carbone, de nanofils de carbone, de nanotubes de carbone, de nanosphères de carbone, de préférence de noir de carbone.

8. Electrode négative selon l'une quelconque des revendications 4 à 7, **caractérisée en ce que** la teneur en matériau actif varie de 50 à 97% en poids, de préférence de 70 à 97% en poids, plus préférentiellement de 80 à 97% en poids, par rapport au poids total de l'électrode négative.

9. Electrode négative selon l'une quelconque des revendications 4 à 8, **caractérisée en ce que** la teneur en composé conducteur varie de 3 à 30% en poids, de préférence de 3 à 20% en poids, par rapport au poids total de l'électrode négative.

10. Batterie lithium-ion comprenant au moins une électrode négative telle que définie à l'une quelconque des revendications 4 à 9.

11. Utilisation d'un matériau de formule (I) suivante :
Li₁₋ₓOHFe₁₊ₓS (I),
dans laquelle x varie de 0,00 à 0,25, de préférence de 0,05 à 0,20, en tant que matériau actif d'électrode négative pour batterie lithium-ion.

## Patentansprüche

1. Aktives Negativelektroden-Material für Lithium-Ionen-Batterie der folgenden Formel (I):
Li₁₋ₓOHFe₁₊ₓS (I),
wobei x von 0,00 bis 0,25 variiert, vorzugsweise von 0,05 bis 0,20.

2. Aktives Material nach Anspruch 1, **dadurch gekennzeichnet, dass** x gleich 0,05 ist.

3. Verfahren zur Herstellung des aktiven Materials nach Anspruch 1 oder 2, die folgenden Schritte umfassend:
(a) Hinzufügen von Eisen und Schwefel zu einer wässrigen Lösung von LiOH in einer Konzentration von 2 bis 6 mol/L, vorzugsweise 4 bis 6 mol/L;
(b) Erhitzen des nach Schritt (a) erhaltenen Gemischs auf eine Temperatur von 130 bis 190 °C;
(c) Erlangen des aktiven Materials.

4. Negative Elektrode, mindestens ein aktives Material nach Anspruch 1 oder 2 umfassend.

5. Negative Elektrode nach Anspruch 4, **dadurch gekennzeichnet, dass** sie ferner mindestens eine leitende Verbindung umfasst.

6. Negative Elektrode nach Anspruch 5, **dadurch gekennzeichnet, dass** die leitende Verbindung aus den Metallpartikeln, dem Kohlenstoff, und deren Gemischen ausgewählt wird, vorzugsweise Kohlenstoff.

7. Negative Elektrode nach Anspruch 6, **dadurch gekennzeichnet, dass** der Kohlenstoff in Form von Graphit, Industrieruß, Kohlenstofffasern, Kohlenstoffnanodrähten, Kohlenstoffnanoröhren und Kohlenstoffnanosphären vorliegt, vorzugsweise Industrieruß.

8. Negative Elektrode nach einem der Ansprüche 4 bis 7, **dadurch gekennzeichnet, dass** der Gehalt an aktivem Material von 50 bis 97 Gew.-% variiert, vorzugsweise von 70 bis 97 Gew.-%, noch bevorzugter von 80 bis 97 Gew.-%, bezogen auf das Gesamtgewicht der negativen Elektrode.

9. Negative Elektrode nach einem der Ansprüche 4 bis 8, **dadurch gekennzeichnet, dass** der Gehalt an leitender Verbindung von 3 bis 30 Gew.-% variiert, vorzugsweise von 3 bis 20 Gew.-%, bezogen auf das Gesamtgewicht der negativen Elektrode.

10. Lithium-Ionen-Batterie, mindestens eine negative Elektrode nach einem der Ansprüche 4 bis 9 umfassend.

11. Verwendung eines Materials der folgenden Formel (I):
Li₁₋ₓOHFe₁₊ₓS (I),
wobei x von 0,00 bis 0,25 variiert, vorzugsweise von 0,05 bis 0,20, als aktives Negativelektroden-Material für Lithium-Ionen-Batterie.

## Claims

1. Negative electrode active material for a lithium-ion battery having the following formula (I):
Li₁₋ₓOHFe₁₊ₓS (I),
wherein x varies from 0.00 to 0.25, preferably from 0.05 to 0.20.

2. Active material according to claim 1, **characterized in that** x is equal to 0.05.

3. Method for making the active material as defined in claim 1 or 2 comprising the following steps:
(a) Adding iron and sulphur in an aqueous solution of LiOH at a concentration ranging from 2 to 6 mol/L, preferably from 4 to 6 mol/L;
(b) Heating the mixture obtained upon completion of step
(a) to a temperature ranging from 130 to 190°C;
(c) Recovering said active material.

4. Negative electrode comprising at least one active material as defined in claim 1 or 2.

5. Negative electrode according to claim 4, **characterized in that** the negative electrode further comprises at least one conductive compound.

6. Negative electrode according to claim 5, **characterized in that** the conductive compound is chosen from metal particles, carbon, and the mixtures thereof, preferably carbon.

7. Negative electrode according to claim 6, **characterized in that** the carbon is in the form of graphite, carbon black, carbon fibres, carbon nanowires, carbon nanotubes, carbon nanospheres, preferably carbon black.

8. Negative electrode according to one of claims 4 to 7, **characterized in that** the content of active material varies from 50 to 97% by weight, preferably from 70 to 97% by weight, and more preferably from 80 to 97% by weight in relation to the total weight of the negative electrode.

9. Negative electrode according to one of claims 4 to 8, **characterized in that** the content of conductive compound varies from 3 to 30% by weight, preferably from 3 to 20% by weight, in relation to the total weight of the negative electrode.

10. Lithium-ion battery comprising at least one negative electrode as defined in one of claims 4 to 9.

11. Use of a material having the following formula (I):
Li₁₋ₓOHFe₁₊ₓS (I),
wherein x varies from 0.00 to 0.25, preferably from 0.05 to 0.20,
as a negative electrode active material for a lithium-ion battery.
